(19) Europäisches Patentamt
European Patent Office
Office européen des brevets

(11) EP 4 589 054 A1

(12) **EUROPEAN PATENT APPLICATION**
published in accordance with Art. 153(4) EPC

(43) Date of publication:
**23.07.2025 Bulletin 2025/30**

(21) Application number: **23865529.4**

(22) Date of filing: **12.09.2023**

(51) International Patent Classification (IPC):
***C25B 13/08*** (2006.01) ***C25B 1/04*** (2021.01)
***C25B 9/00*** (2021.01) ***C25B 9/23*** (2021.01)
***C25B 9/65*** (2021.01) ***C25B 11/052*** (2021.01)
***C25B 11/056*** (2021.01) ***C25B 11/065*** (2021.01)
***C25B 13/04*** (2021.01) ***H01B 1/06*** (2006.01)

(52) Cooperative Patent Classification (CPC):
**C25B 1/04; C25B 9/00; C25B 9/23; C25B 9/65; C25B 11/052; C25B 11/056; C25B 11/065; C25B 13/04; C25B 13/08; H01B 1/06**

(86) International application number:
**PCT/JP2023/033211**

(87) International publication number:
**WO 2024/058177 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.09.2022 JP 2022145366**

(71) Applicant: **AGC INC.**
**Chiyoda-ku,**
**Tokyo 1008405 (JP)**

(72) Inventors:
- **HAYABE, Shintaro**
  **Tokyo 100-8405 (JP)**
- **OKUYAMA, Takumi**
  **Tokyo 100-8405 (JP)**
- **SUMIKURA, Kosuke**
  **Tokyo 100-8405 (JP)**

(74) Representative: **Müller-Boré & Partner Patentanwälte PartG mbB**
**Friedenheimer Brücke 21**
**80639 München (DE)**

# (54) SOLID POLYMER ELECTROLYTE MEMBRANE, MEMBRANE ELECTRODE ASSEMBLY, METHOD FOR PRODUCING MEMBRANE ELECTRODE ASSEMBLY, AND WATER ELECTROLYSIS DEVICE

(57) An object of the present invention is to provide a polymer electrolyte membrane with excellent low gas permeability and chemical durability and to provide a membrane electrode assembly, a method for producing a membrane electrode assembly and a water electrolyzer. The polymer electrolyte membrane of the present invention includes a fluorinated polymer having ion exchange groups, a platinum-containing material, cerium oxide and a woven fabric.

Fig. 1

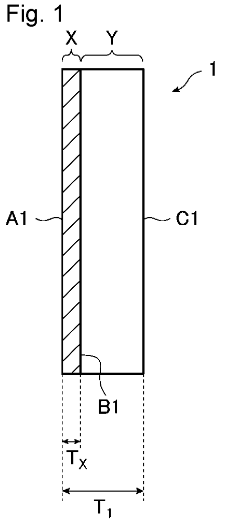


EP 4 589 054 A1

## Description

### TECHNICAL FIELD

The present invention relates to a polymer electrolyte membrane, a membrane electrode assembly, a method for producing a membrane electrode assembly, and a water electrolyzer.

### BACKGROUND ART

In the so-called power-to-gas technology for storing and using surplus electric power by converting it to gas, the utilization of polymer electrolyte membrane water electrolyzers (PEM water electrolyzers) has been explored.

For example, Patent Document 1 discloses a polymer electrolyte membrane water electrolyzer provided with a membrane electrode assembly including an anode and a cathode, each having a catalyst layer, and a solid polymer electrolyte membrane disposed between the anode and the cathode.

### PRIOR ART DOCUMENTS

### PATENT DOCUMENTS

Patent Document 1: WO2022/050363

### DISCLOSURE OF INVENTION

### TECHNICAL PROBLEM

Recent years have seen a demand for water electrolyzers with higher performance, and more specifically, reduced hydrogen crossover. Herein, hydrogen crossover refers to a phenomenon where, in a water electrolyzer, hydrogen gas generated at a cathode transfers to an anode side through a polymer electrolyte membrane. The occurrence of hydrogen crossover results in a problem of deterioration in hydrogen gas recovery. Thus, polymer electrolyte membranes capable of suppressing permeation of hydrogen gas generated in the system, i.e., having low gas permeability are demanded.

Further, the application of polymer electrolyte membranes to water electrolyzers presents a problem that a fluorinated polymer contained in the polymer electrolyte membrane is decomposed by a compound (such as hydrogen peroxide) formed in the system during operation. Thus, polymer electrolyte membranes having excellent chemical durability are demanded.

The present inventors have assessed a water electrolyzer having a polymer electrolyte membrane as disclosed in Patent Document 1, and found that there is room for improvement in at least one of the low gas permeability and chemical durability of the polymer electrolyte membrane.

The present invention has been made in view of the above-mentioned problems. It is an object of the present invention to provide a polymer electrolyte membrane which is excellent in low gas permeability and chemical durability, and to provide a membrane electrode assembly, a method for producing a membrane electrode assembly, and a water electrolyzer.

### SOLUTION TO PROBLEM

As a result of extensive studies made on the above-mentioned problems, the present inventors have found that desired effects can be obtained by the use of a polymer electrolyte membrane containing a fluorinated polymer having ion exchange groups, a platinum-containing material, cerium oxide and a woven fabric, and thus have accomplished the present invention.

Namely, the present inventors have found the following solutions to the above-mentioned problems.

[1] A polymer electrolyte membrane comprising a fluorinated polymer having ion exchange groups, a platinum-containing material, cerium oxide and a woven fabric.
[2] The polymer electrolyte membrane according to [1], wherein the ion exchange capacity of the fluorinated polymer is from 0.90 to 2.00 meq/g dry resin.
[3] The polymer electrolyte membrane according to [1] or [2], wherein the mass of the cerium oxide per 1 $cm^2$ of the polymer electrolyte membrane is 0.010 $mg/cm^2$ or more.
[4] The polymer electrolyte membrane according to any one of [1] to [3], wherein the mass of the cerium oxide per 1

$cm^2$ of the polymer electrolyte membrane is 0.132 $mg/cm^2$ or more.

[5] The polymer electrolyte membrane according to any one of [1] to [4],

wherein the mass of the platinum-containing material per 1 $cm^2$ of the polymer electrolyte membrane is 0.030 $mg/cm^2$ or more, and
wherein the mass of the cerium oxide per 1 $cm^2$ of the polymer electrolyte membrane is 0.132 $mg/cm^2$ or more.

[6] The polymer electrolyte membrane according to any one of [1] to [5], wherein the platinum-containing material is arranged biased to one side of the polymer electrolyte membrane.

[7] The polymer electrolyte membrane according to any one of [1] to [6], wherein the platinum-containing material is supported on a carrier.

[8] The polymer electrolyte membrane according to any one of [1] to [7], wherein the ion exchange groups of the fluorinated polymer are sulfonic acid functional groups.

[9] The polymer electrolyte membrane according to any one of [1] to [8], wherein the fluorinated polymer comprises at least one type selected from the group consisting of units represented by the formula (1-3) and units represented by the formula (1-4).

In the formulas (1-3) and (1-4) as described later, $R^{f1}$ is a perfluoroalkylene group which may have an oxygen atom between carbon atoms; $R^{f2}$ is a single bond or a perfluoroalkylene group which may have an oxygen atom between carbon atoms; $R^{f3}$ is a single bond or a perfluoroalkylene group which may have an oxygen atom between carbon atoms; r is 0 or 1; m is 0 or 1; and M is each independently a hydrogen atom, an alkali metal or a quaternary ammonium cation.

[10] The polymer electrolyte membrane according to any one of [1] to [9], wherein the woven fabric is made of a material selected from the group consisting of polytetrafluoroethylene, a tetrafluoroethylene-perfluoroalkyl vinyl ether copolymer, polyether ether ketone and polyphenylene sulfide.

[11] A membrane electrode assembly comprising:

the polymer electrolyte membrane as defined in any one of [1] to [10],
a cathode catalyst layer provided on one surface of the polymer electrolyte membrane; and
an anode catalyst layer provided on the other surface of the polymer electrolyte membrane.

[12] A water electrolyzer comprising:

the membrane electrode assembly as defined in [11];
a power supply unit connecting the cathode catalyst layer side and the anode catalyst layer side of the membrane electrode assembly; and
a water supply unit to supply water to the anode catalyst layer side.

[13] A method for producing a membrane electrode assembly, the membrane electrode assembly comprising the polymer electrolyte membrane as defined in any one of [1] to [10], a cathode catalyst layer and an anode catalyst layer, the method comprising forming the cathode catalyst layer on one surface of the polymer electrolyte membrane and forming the anode catalyst layer on the other surface of the polymer electrolyte membrane.

## ADVANTAGEOUS EFFECTS OF INVENTION

According to the present invention, it is possible to provide a polymer electrolyte membrane which is excellent in low gas permeability and chemical durability, and to provide a membrane electrode assembly, a method for producing a membrane electrode assembly, and a water electrolyzer.

## BRIEF DESCRIPTION OF DRAWINGS

Fig. 1 is a schematic cross-sectional view illustrating an electrolyte membrane with biased arrangement of a platinum-containing material.
Fig. 2 is a schematic cross-sectional view illustrating an example of the membrane electrode assembly of the present invention.
Fig. 3 is a schematic cross-sectional view illustrating another example of the membrane electrode assembly of the present invention.

DESCRIPTION OF EMBODIMENTS

The following definitions of terms apply throughout the present specification and claims unless otherwise specified.

An "ion exchange group" refers to a group containing at least one ion exchangeable for a different ion, such as a sulfonic acid functional group and a carboxylic acid functional group as described below.

A "sulfonic acid functional group" refers to a sulfonic acid group ($-SO_3H$) or a sulfonate group. The sulfonate group may be, for example, $(-SO_3^-)Ma^+$, $(-SO_3^-)_2Mb^{2+}$ or $(-SO_3^-)_3Mc^{3+}$ (where $Ma^+$ is an alkali metal or a quaternary ammonium cation; $Mb^{2+}$ is a divalent metal ion; $Mc^{3+}$ is a trivalent metal ion). When there are two ligands, the number of ion exchange groups is counted as 2, and when there are three ligands, the number of ion exchange groups is counted as 3.

A "carboxylic acid functional group" refers to a carboxylic acid group (-COOH) or a carboxylate group. The carboxylate group may be, for example, $(-COO^-)Ma^+$, $(-COO^-)_2Mb^{2+}$ or $(-COO^-)_3Mc^{3+}$ (where $Ma^+$ is an alkali metal or a quaternary ammonium cation; $Mb^{2+}$ is a divalent metal ion; and $Mc^{3+}$ is a trivalent metal ion). When there are two ligands, the number of ion exchange groups is counted as 2, and when there are three ligands, the number of ion exchange groups is counted as 3.

A "precursor membrane" refers to a membrane containing a polymer having groups convertible to ion exchange groups.

A "group convertible to an ion exchange group" refers to a group that can be converted to an ion exchange group by treatments such as hydrolysis and conversion to acid form.

A "group convertible to a sulfonic acid functional group" refers to a group that can be converted to a sulfonic acid functional group by treatments such as hydrolysis and conversion to acid form.

A "group convertible to a carboxylic acid functional group" refers to a group that can be converted to a carboxylic acid functional group by treatments such as hydrolysis and conversion to acid form.

A "unit" in a polymer refers to an atomic group derived from a single monomer molecule, which is formed by polymerization reaction of the monomer. A unit may be an atomic group formed directly by polymerization or may be an atomic group formed by polymerization followed by modification to a partially different structure.

A numerical range expressed using "to" means a range including numerical values described before and after "to" as the lower and upper limits. In a series of numerical ranges described in the present specification, the upper limit or lower limit of a numerical range may be replaced by the upper limit or lower limit of another numerical range in the same series. The upper limit or lower limit of any numerical range described in the present specification may be replaced by any of numerical values indicated in Examples.

[Electrolyte membrane]

The polymer electrolyte membrane (hereinafter also simply referred to as "electrolyte membrane") of the present invention contains a fluorinated polymer having ion exchange groups (hereinafter also simply referred to as a "fluorinated polymer (I)"), a platinum-containing material, cerium oxide and a woven fabric.

It is estimated that, when the electrolyte membrane of the present invention is applied to a water electrolyzer, hydrogen generated at the cathode side and oxygen generated at the anode side react to form water on the platinum-containing material of the electrolyte membrane whereby the transfer of hydrogen to the anode side (hydrogen crossover) can be suppressed. For this reason, the electrolyte membrane of the present invention is presumably excellent in low gas permeability.

It is also estimated that, when the electrolyte membrane of the present invention is applied to a water electrolyzer, OH radicals generated from hydrogen peroxide formed in the system during operation are quenched by cerium ions dissociated from the cerium oxide contained in the electrolyte membrane whereby decomposition of the fluorinated polymer (I) can be suppressed. For this reason, the electrolyte membrane of the present invention is presumably excellent in chemical durability.

It is further estimated that, when the electrolyte membrane of the present invention is applied to a water electrolyzer, hydrogen generated at the cathode side and oxygen generated at the anode side react to form hydrogen on the platinum-containing material of the electrolyte membrane whereby the amount of hydrogen peroxide formed is reduced, and the amount of OH radicals generated is reduced as the hydrogen peroxide is decomposed by the platinum-containing material itself. For this reason as well, the electrolyte membrane of the present invention is presumably excellent in chemical durability.

The electrolyte membrane may have a single-layer structure or a multilayer structure. Specific embodiments of the electrolyte membrane having a multilayer structure include those having a laminated structure of electrolyte layers different in at least one of platinum-containing material content and cerium oxide content or a laminated structure of electrolyte layers different in ion exchange capacity.

Each of the platinum-containing material and the cerium oxide contained in the electrolyte membrane may be

distributed throughout the entire electrolyte membrane or may be arranged biased to one side of the electrolyte membrane. Particularly, it is preferred that at least one of the platinum-containing material and the cerium oxide is arranged biased to one side of the electrolyte membrane. It is more preferred that, among the platinum-containing material and the cerium oxide, at least the platinum-containing material is arranged biased to one side of the electrolyte membrane. The platinum-containing material and the cerium oxide (that is, both of the platinum-containing material and the cerium oxide) may be arranged biased to one side of the electrolyte membrane.

In the case where the electrolyte membrane is applied to a water electrolyzer, the side of the electrolyte membrane to which the platinum-containing material is arranged biased is preferably located on the anode side from the viewpoint of more suppression of hydrogen crossover. In this case, a catalyst contained in a catalyst layer of the anode preferably includes iridium oxide to enhance the above-mentioned effects.

In the present specification, the expression "the platinum-containing material is arranged biased to one side of the electrolyte membrane" means that the concentration of the platinum-containing material in a region extending from one surface (hereinafter also referred to a "surface A") of the electrolyte membrane to a predetermined depth position (hereinafter also referred to as a "depth position B") before reaching the other surface (hereinafter also referred to as a "surface C") of the electrolyte membrane is higher than the concentration of the platinum-containing material in a region extending from the surface C to the depth position B.

Further, the expression "the cerium oxide is arranged biased to one side of the electrolyte membrane" means that the concentration of the cerium oxide in a region from the surface A to a depth position B is higher than the concentration of the cerium oxide in a region from the surface C to the depth position B.

Furthermore, the expression "the platinum-containing material and the cerium oxide are arranged biased to one side of the electrolyte membrane" means that the concentration of the platinum-containing material in a region from the surface A to a depth position B is higher than the concentration of the platinum-containing material in a region from the surface C to the depth position B and, at the same time, the concentration of the cerium oxide in the region from the surface A to the depth position B is higher than the concentration of the cerium oxide in the region from the surface C to the depth position B.

As a preferable embodiment of the electrolyte membrane in which the platinum-containing material is arranged biased to one side of the electrolyte membrane, an embodiment may be mentioned in which the concentration of the platinum-containing material in a region from the surface A to a depth position $B_{50}$ corresponding to 50% of the membrane thickness of the electrolyte membrane is higher than the concentration of the platinum-containing material in a region from the surface C to the depth position $B_{50}$.

The state in which "the platinum-containing material is arranged biased to one side of the electrolyte membrane" will be described in detail below with reference to Fig. 1. Fig. is a schematic cross-sectional view illustrating an example of the electrolyte membrane with biased arrangement of the platinum-containing material.

In Fig. 1, an electrolyte membrane 1 has a surface A1 as one surface and a surface C1 as the other surface. A depth position B1 represents a position at a distance $T_X$ away from the surface A1 toward the surface C1.

The minimum distance $T_1$ from the surface A1 to the surface C1 of the electrolyte membrane 1 corresponds to the membrane thickness of the electrolyte membrane 1. The distance Tx is X% of the distance $T_1$. For example, in the case where the distance Tx is 20% of the distance $T_1$, the depth position B1 is a position corresponding to 20% of the membrane thickness (distance $T_1$) of the electrolyte membrane 1 from the surface A1 of the electrolyte membrane 1.

A region X represents a region from the surface A1 to the depth position B1, and a region Y represents a region from the surface C1 to the depth position B1.

In the case where there are convex-concave parts on the surface of the electrolyte membrane 1, the above distances are measured with respect to the position at which the membrane thickness of the electrolyte membrane 1 becomes minimum.

In Fig. 1, when the concentration of the platinum-containing material in the region X is higher than the concentration of the platinum-containing material in the region Y, it can be said that the platinum-containing material is arranged biased to one side of the electrolyte membrane.

With a view to obtaining more excellent effects of the present invention, the platinum-containing material contained in the electrolyte membrane is preferably present from one surface of the electrolyte membrane to a position corresponding to 25% of the membrane thickness of the electrolyte membrane, more preferably from one surface of the electrolyte membrane to a position corresponding to 20% of the membrane thickness of the electrolyte membrane, still more preferably from one surface of the electrolyte membrane to a position corresponding to 15% of the membrane thickness of the electrolyte membrane, particularly preferably from one surface of the electrolyte membrane to a position corresponding to 10% of the membrane thickness of the electrolyte membrane. Further, it is more preferred that the platinum-containing material contained in the electrolyte membrane is present only in a region up to the above membrane thickness position.

The locations of presence of the platinum-containing material and the cerium oxide in the electrolyte membrane can be specified by elemental distribution analysis using, for example, an energy dispersive X-ray spectrometer (model

"QUANTAX FlatQUAD", manufactured by Bruker).

The above-mentioned distance Tx is determined based on the obtained elemental distribution.

As a method for arranging the platinum-containing material biased to one side of the electrolyte membrane, a method may be mentioned in which the electrolyte membrane is produced by laminating a first electrolyte layer containing the platinum-containing material and a second electrolyte layer containing the platinum-containing material at a lower concentration than the first electrolyte layer or containing no platinum-containing material.

As another method, a method may be mentioned in which an electrolyte membrane containing no platinum-containing material is immersed, from one side, in a solution containing platinum ions such that the platinum-containing material is impregnated in a region from one surface to a predetermined depth position of the electrolyte membrane.

It is preferred that the electrolyte membrane contains substantially no thickener because the use of a thickener leads to an increase of membrane resistance. When the electrolyte membrane contains substantially no thickener, it means that the content of the thickener is 0.1 mass% or less to the total mass of the electrolyte membrane. The content of the thickener is preferably 0.01 mass% or less, more preferably 0 mass%.

Specific examples of the thickener will be described later.

The thickness of the electrolyte membrane is preferably 30 μm or more, and is preferably 400 μm or less, more preferably 300 μm or less, still more preferably 200 μm or less, particularly preferably 90 μm or less, most preferably 60 μm or less. In the case where the electrolyte membrane has a multilayer structure, the thickness of the electrolyte membrane refers to the total thickness of the respective layers.

In the case where the electrolyte membrane has a multilayer structure formed with the above-mentioned first and second electrolyte layers, the ratio of the thickness of the first electrolyte layer to the thickness of the second electrolyte layer (thickness of first electrolyte layer/thickness of second electrolyte layer) is preferably 0.02 or higher, more preferably 0.05 or higher, still more preferably 0.12 or higher, yet more preferably 0.19 or higher, and is preferably 0.80 or lower, more preferably 0.50 or lower, still more preferably 0.30 or lower.

The thickness of the electrolyte membrane is measured on a magnified cross-sectional image of the electrolyte membrane (e.g. at a magnification of 100) taken by an optical microscope (model "BX-51", manufactured by Olympus Corporation). In the case where there are convex-concave parts on the surface of the electrolyte membrane, the thickness of the electrolyte membrane is an arithmetic mean of thickness measurements at total 20 points, i.e., 10 points on concave parts of the electrolyte membrane and 10 points on convex parts of the electrolyte membrane. In the case where yarns constituting the woven fabric are contained in convex parts of the electrolyte membrane, the thickness of such yarns is subtracted from the thickness of the convex parts.

<Woven fabric>

The woven fabric functions to improve the dimensional stability, strength, handleability etc. of the electrolyte membrane.

The aperture ratio of the woven fabric is preferably 50% or higher, more preferably 55% or higher, still more preferably 60% or higher, particularly preferably 70% or higher, with a view to achieving a lower electrolysis voltage.

The upper limit of the aperture ratio of the woven fabric is preferably 90% or lower, more preferably 80% or lower, with a view to achieving higher strength of the membrane electrode assembly.

The aperture ratio of the woven fabric is calculated by the following formula (ε) based on the average diameter R1 of yarns constituting the woven fabric and the average spacing P1 (hereinafter also referred to as "pitch P1") between adjacent ones of yarns constituting the woven fabric.

Here, the average diameter R1 of yarns is an arithmetic mean of diameter measurements of 10 different yarns arbitrarily selected on a magnified image of the woven fabric surface (e.g. at a magnification of 100) taken by a microscope. Further, the pitch P1 is an arithmetic mean of measurements of 10 different spacings arbitrarily selected on a magnified image of the woven fabric surface (e.g. at a magnification of 100) taken by a microscope.

$$\text{Aperture ratio (\%) of woven fabric} = [P1/(P1 + R1)]^2 \times 100 \qquad (\varepsilon)$$

The denier count of yarns constituting the woven fabric is preferably 2 or more. With a view to achieving higher strength and dimensional stability of the membrane electrode assembly, the denier count is more preferably 10 or more, still more preferably 15 or more.

The upper limit of the denier count of yarns constituting the woven fabric is preferably 60 or less, more preferably 50 or less, still more preferably 20 or less, with a view to achieving a lower electrolysis voltage.

Here, the denier count refers to a value that expresses the mass of 9000 m of yarns in grams (g/9000m).

With a view to achieving high strength and dimensional stability of the membrane electrode assembly, the density of yarns constituting the woven fabric is preferably at 50 yarns/inch or higher, more preferably 70 yarns/inch or higher, still

more preferably 90 yarns/inch or higher. With a view to achieving a lower electrolysis voltage, the density of yarns constituting the woven fabric is preferably 200 yarns/inch or lower, more preferably 150 yarns/inch or lower, still more preferably 100 yarns/inch or lower.

The yarns constituting the woven fabric can be each composed of either a monofilament consisting of one filament or a multifilament consisting of two or more filaments. Preferred is a monofilament.

The yarns constituting the woven fabric are each independently preferably made of a material selected from the group consisting of polytetrafluoroethylene (hereinafter also referred to as "PTFE"), a tetrafluoroethylene-perfluoroalkyl vinyl ether copolymer (hereinafter also referred to as "PFA"), polyether ether ketone (hereinafter also referred to as "PEEK") and polyphenylene sulfide (hereinafter also referred to as "PPS") to achieve higher durability of the yarns.

The yarns constituting the woven fabric are preferably in the form of slit yarns to achieve higher durability and strength of the yarns.

In the case where the material constituting the woven fabric is PTFE, in view of good balance between strength and handleability of the electrolyte membrane, the fabric weight of the woven fabric is preferably 20 $g/m^2$ or more, more preferably 30 $g/m^2$ or more, and is preferably 40 $g/m^2$ or less.

In the case where the material constituting the woven fabric is PFA, in view of good balance between strength and handleability of the electrolyte membrane, the fabric weight of the woven fabric is preferably 10 $g/m^2$ or more, and is preferably 30 $g/m^2$ or less, more preferably 20 $g/m^2$ or less.

In the case where the material constituting the woven fabric is PEEK, in view of good balance between strength and handleability of the electrolyte membrane, the fabric weight of the woven fabric is preferably 5 $g/m^2$ or more, and is preferably 40 $g/m^2$ or less, more preferably 30 $g/m^2$ or less.

In the case where the material constituting the woven fabric is PPS, in view of good balance between strength and handleability of the electrolyte membrane, the fabric weight of the woven fabric is preferably 5 $g/m^2$ or more, and is preferably 40 $g/m^2$ or more, more preferably 30 $g/m^2$ or less.

The content of the woven fabric to the total mass of the electrolyte membrane is preferably 3 mass% or more, more preferably 5 mass% or more, and is preferably 50 mass% or less, more preferably 40 mass% or less, still more preferably 30 mass% or less.

<Fluorinated polymer (I)>

The ion exchange capacity of the fluorinated polymer (I) is preferably at least 0.90 meq/g dry resin, more preferably more than 1.10 meq/g dry resin, still more preferably at least 1.15 meq/g dry resin, particularly preferably at least 1.20 meq/g dry resin, most preferably at least 1.25 meq/g dry resin, with a view to achieving a lower electrolysis voltage when the electrolyte membrane is applied to a water electrolyzer.

The ion exchange capacity of the fluorinated polymer (I) is preferably at most 2.00 meq/g dry resin, more preferably at most 1.50 meq/g dry resin, still more preferably at most 1.43 meq/g dry resin, in consideration of the strength of the membrane electrode assembly in a hydrated state.

The fluorinated polymer (I) may be one type or a laminate or mixture of two or more types.

Although the electrolyte membrane may contain a polymer other than the fluorinated polymer (I), it is preferred that the polymer in the electrolyte membrane practically consists of the fluorinated polymer (I). Here, the expression "practically consist of the fluorinated polymer (I)" means that the content of the fluorinated polymer (I) is 95 mass% or more to the total mass of the polymers in the electrolyte membrane. The upper limit of the content of the fluorinated polymer (I) is 100 mass% to the total mass of the polymers in the electrolyte membrane.

As examples of the polymer other than the fluorinated polymer (I), there may be mentioned one or more types of polyazole compounds selected from the group consisting of polymers of heterocyclic compounds each containing one or more nitrogen atoms in the ring and polymers of heterocyclic compounds each containing one or more nitrogen atoms and oxygen and/or sulfur atoms in the ring.

Specific examples of the polyazole compounds include polyimidazole compounds, polybenzimidazole compounds, polybenzobisimidazole compounds, polybenzoxazole compounds, polyoxazole compounds, polythiazole compounds and polybenzothiazole compounds.

In consideration of the oxidation resistance of the electrolyte membrane, a polyphenylene sulfide resin and a polyphenylene ether resin may also be mentioned as examples of the other polymer.

The fluorinated polymer (I) has ion exchange groups. Specific examples of the ion exchange groups include sulfonic acid functional groups and carboxylic acid functional groups. Sulfonic acid functional groups are preferred to achieve a lower electrolysis voltage when the electrolyte membrane is applied to a water electrolyzer.

In the following, embodiments of a fluorinated polymer having sulfonic acid functional groups (hereinafter also referred to as a fluorinated polymer (S)) will be discussed mainly.

The fluorinated polymer (S) preferably contains units based on a fluorinated olefin and units based on a fluorine-containing monomer having a sulfonic acid functional group.

The fluorinated olefin may be, for example, a $C_{2-3}$ fluoroolefin having at least one fluorine atom in the molecule. Specific examples of the fluoroolefin include tetrafluoroethylene (hereinafter also referred to as "TFE"), chlorotrifluoroethylene, vinylidene fluoride, vinyl fluoride and hexafluoropropylene. Among others, TFE is preferred in terms of the monomer production cost, the reactivity with other monomers and the ability to give the fluorinated polymer (S) with excellent properties.
The fluorinated olefin may be one type alone or a combination of two or more types.
The units based on the fluorine-containing monomer having a sulfonic acid functional group are preferably units represented by the formula (1).

Formula (1) $-[CF_2-CF(-L-(SO_3M)_n)]-$

Here, L is a (n+1)-valent perfluorohydrocarbon group which may contain an etheric oxygen atom.
The etheric oxygen atom may be located at a terminal end of the perfluorohydrocarbon group or may be located between carbon atoms of the perfluorohydrocarbon group.
The number of carbon atoms in the (n+1)-valent perfluorohydrocarbon group is preferably 1 or more, more preferably 2 or more, and is preferably 20 or less, more preferably 10 or less.
As L, preferred is a (n+1)-valent perfluoroaliphatic hydrocarbon group which may contain an etheric oxygen atom. More preferred is a divalent perfluoroalkylene group which may contain an etheric atom oxygen atom as corresponding to an embodiment of n = 1, or a trivalent perfluoroaliphatic hydrocarbon group which may contain an etheric oxygen atom as corresponding to an embodiment of n = 2.
The above-mentioned divalent perfluoroalkylene group may be linear or branched.
M is a hydrogen atom, an alkali metal or a quaternary ammonium cation. When there are a plurality of M, the plurality of M may be the same or different.
n is 1 or 2.
As the units represented by the formula (1), units represented by the formula (1-1), units represented by the formula (1-2), units represented by the formula (1-3) or units represented by the formula (1-4) are preferred.

Formula (1-1) $-[CF_2-CF(-O-R^{f1}-SO_3M)]-$

Formula (1-2) $-[CF_2-CF(-R^{f1}-SO_3M)]-$

Formula (1-3)

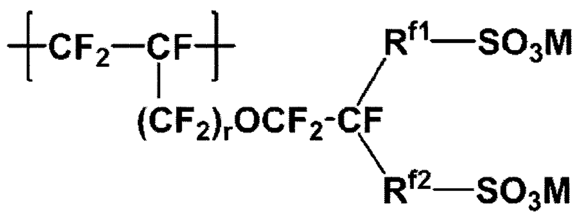

Formula (1-4)

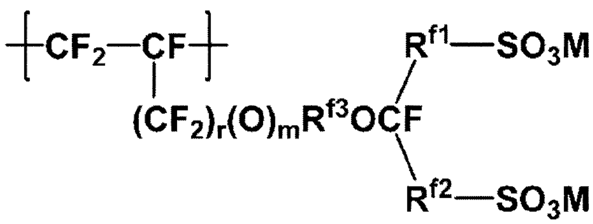

Here, $R^{f1}$ is a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.
$R^{f2}$ is a single bond or a perfluoroalkylene group which may contain an oxygen atom between carbon atoms. The number of carbon atoms in the perfluoroalkylene group is preferably 1 or more, more preferably 2 or more, and is preferably

20 or less, more preferably 10 or less.

$R^{f3}$ is a single bond or a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

r is 0 or 1.

m is 0 or 1.

M is each independently a hydrogen atom, an alkali metal or a quaternary ammonium cation.

As the units represented by the formula (1-1) and the units represented by the formula (1-2), units represented by the formula (1-5) are more preferred.

Formula (1-5) $-[CF_2-CF(-(CF_2)_x-(OCF_2CFY)_y-O-(CF_2)_z-SO_3M)]-$

Here, x is 0 or 1, y is an integer of 0 to 2, z is an integer of 1 to 4, Y is F or $CF_3$, and M is as described above.

Specific examples of the units represented by the formula (1-1) include the following units where w is an integer of 1 to 8, x is an integer of 1 to 5, and M is as described above.

$-[CF_2-CF(-O-(CF_2)_w-SO_3M)]-$

$-[CF_2-CF(-O-CF_2CF(CF_3)-O-(CF_2)_w-SO_3M)]-$

$-[CF_2-CF(-(O-CF_2CF(CF_3))_x-SO_3M)]-$

Specific examples of the units represented by the formula (1-2) include the following units where w is an integer of 1 to 8, and M is as described above.

$-[CF_2-CF(-(CF_2)_w-SO_3M)]-$

$-[CF_2-CF(-CF_2-O-(CF_2)_w-SO_3M)]-$

As the units represented by the formula (1-3), preferred are units represented by the formula (1-3-1) where the definition of M is as described above.

Formula (1-3-1)

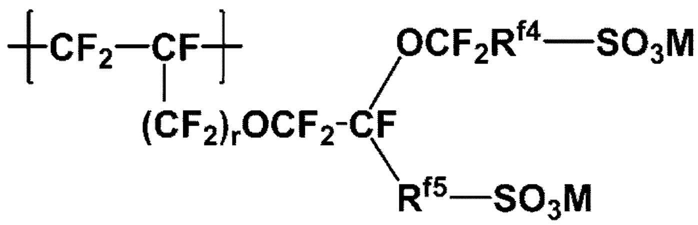

$R^{f4}$ is a $C_{1-6}$ linear perfluoroalkylene group, and $R^{f5}$ is a single bond or a $C_{1-6}$ linear perfluoroalkylene group which may contain an oxygen atom between carbon atoms. The definitions of r and M in the formula are as described above.

Specific examples of the units represented by the formula (1-3-1) include the following units.

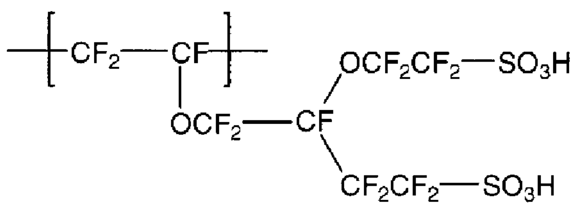

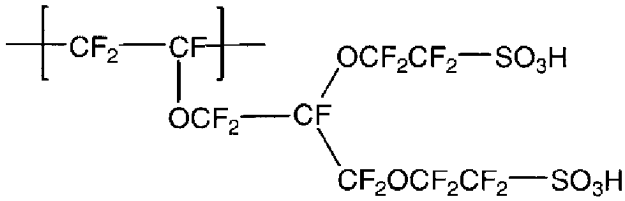

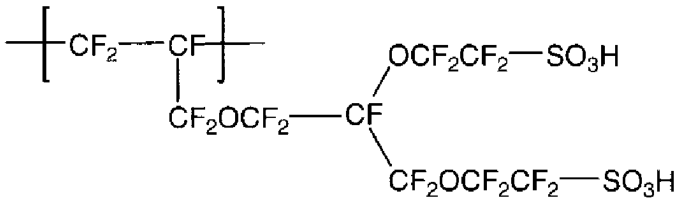

As the units represented by the formula (1-4), preferred are units represented by the formula (1-4-1) where the definitions of $R^{f1}$, $R^{f2}$ and M are as described above.

Formula (1-4-1)

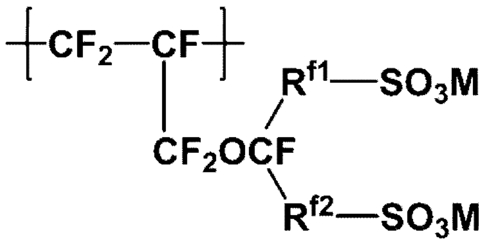

Specific examples of the units represented by the formula (1-4-1) include the following unit.

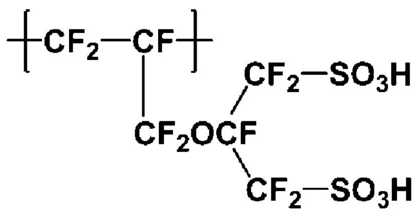

The fluorine-containing monomer having a sulfonic acid functional group may be one type alone or a combination of two or more types.

The fluorinated polymer (I) may contain units based on an additional monomer, other than the units based on the fluorinated olefin and the units based on the fluorine-containing monomer having a sulfonic acid functional group.

Specific examples of the additional monomer include $CF_2=CFR^{f6}$ (where $R^{f6}$ is a $C_{2-10}$ perfluoroalkyl group), $CF_2=CF\text{-}OR^{f7}$ (where $R^{f7}$ is a $C_{1-10}$ perfluoroalkyl group) and $CF_2=CFO(CF_2)_yCF=CF_2$ (where v is an integer of 1 to 3).

The content of the units based on the additional monomer is preferably 30 mass% or less to all the units in the fluorinated polymer (I) to ensure a certain level of ion exchange performance.

The content of the fluorinated polymer (I) is preferably 95 to 100 mass% to the total mass of the electrolyte membrane.

<Platinum-containing material>

The platinum-containing material can be any material containing a platinum atom. The platinum-containing material may be, for example, platinum itself, platinum oxide, a composite metal oxide containing platinum, or a platinum alloy.

Specific examples of the composite metal oxide containing platinum include $M_xPt_3O_4$ (where M is at least one metal atom selected from the group consisting of Li, Na, Mg, Ca, Zn, Cd, Co, Ni, Mn, Cu, Ag, Bi and Ce; and x is a value greater than 0 and smaller than or equal to 1).

Specific examples of the platinum alloy include alloys each containing platinum and at least one metal selected from the group consisting of transition metals and noble metals other than platinum.

The form of the platinum-containing material can be, for example, particulate form or sheet form. The platinum-containing material, when in particulate form, may be core-shell particles. Examples of the core-shell particles include those having a core made of carbon or containing a metal other than platinum and a shell containing platinum.

In the case where the platinum-containing material is in particulate form, the average particle size (D50) of the platinum-containing material is preferably 1 nm or more, more preferably 5 nm or more, still more preferably 10 nm or more, particularly preferably 100 nm or more, and is preferably 10000 nm or less, more preferably 5000 nm or less, still more preferably 3000 nm or less.

The average particle size of the platinum-containing material is a volume-based 50% cumulative particle size (D50) determined by performing dispersion treatment on a dispersion containing the platinum-containing material and measuring the resulting dispersion by a particle size analyzer. The detailed measurement conditions are as described below.

A dispersion containing the platinum-containing material and the fluorinated polymer is subjected to dispersion treatment (dispersion by a bead mill). After that, the particle size distribution of the dispersion is measured by a laser diffraction particle size analyzer (MT3300EXII-SDC, manufactured by MicrotracBEL Corporation) to obtain a volume-based 50% cumulative particle size of the platinum-containing material. An arithmetic mean of three measurements of the 50% cumulative particle size is taken as D50.

The mass of the platinum-containing material per 1 $cm^2$ of the electrolyte membrane is preferably 0.010 $mg/cm^2$ or more, more preferably 0.015 $mg/cm^2$ or more, still more preferably 0.030 $mg/cm^2$ or more, particularly preferably 0.040 $mg/cm^2$ or more, and is preferably 0.050 $mg/cm^2$ or less. When the mass of the platinum-containing material is 0.030 $mg/cm^2$ or more, the occurrence of hydrogen crossover can be more suppressed. When the mass of the platinum-containing material is 0.050 $mg/cm^2$ or less, a lower electrolysis voltage can be achieved, and a membrane electrode assembly and a water electrolyzer can be provided at low cost.

In the case where the electrolyte membrane has a multilayer structure, the mass of the platinum-containing material in at least one electrolyte layer (preferably, the above-mentioned first electrolyte layer) of the electrolyte membrane, per 1 $cm^2$ of the electrolyte membrane, is preferably 0.010 $mg/cm^2$ or more, more preferably 0.015 $mg/cm^2$ or more, still more preferably 0.030 $mg/cm^2$ or more, particularly preferably 0.040 $mg/cm^2$ or more, and is preferably 0.050 $mg/cm^2$ or less. When the mass of the platinum-containing material is 0.030 $mg/cm^2$ or more, the occurrence of hydrogen crossover can be more suppressed. When the mass of the platinum-containing material is 0.050 $mg/cm^2$ or less, a lower electrolysis voltage can be achieved, and a membrane electrode assembly and a water electrolyzer can be provided at low cost.

In the case where the electrolyte membrane has a single-layer structure, the mass ratio of the platinum-containing material to the fluorinated polymer (I) (mass of platinum-containing material/mass of fluorinated polymer (I)) in the electrolyte membrane is preferably from 0.0005 to 0.0040. When the mass ratio is 0.0005 or higher, the occurrence of hydrogen crossover can be more suppressed. When the mass ratio is 0.0040 or lower, a lower electrolysis voltage can be achieved, and a membrane electrode assembly and a water electrolyzer can be provided at low cost.

In the case where the electrolyte membrane has a multilayer structure, the mass ratio of the platinum-containing material to the fluorinated polymer (I) (mass of platinum-containing material/mass of fluorinated polymer (I)) in at least one electrolyte layer (preferably, the above-mentioned first electrolyte layer) of the electrolyte membrane is preferably 0.005 or higher, more preferably 0.007 or higher, still more preferably 0.014 or higher, and is preferably 0.024 or lower. When the mass ratio is 0.005 or higher, the occurrence of hydrogen crossover can be more suppressed. When the mass ratio is 0.024 or lower, a lower electrolysis voltage can be achieved, and a membrane electrode assembly and a water electrolyzer can be provided at low cost.

The platinum-containing material may be supported on a carrier. Specific examples of the carrier include carbon carriers such as carbon black powders, graphitized carbon, carbon fibers, carbon nanotubes and the like.

In the case where the platinum-containing material is supported on a carrier, the amount of the platinum-containing material supported to the total mass of the platinum-containing material and the carrier is preferably 10 mass% or more, more preferably 20 mass% or more, still more preferably 30 mass% or more, and is preferably 50 mass% or less.

In the case where the platinum-containing material is supported on a carrier, the mass ratio of the carrier for supporting the platinum-containing material to the fluorinated polymer (I) (mass of fluorinated polymer (I)/mass of carrier) is preferably 10.0 or higher, more preferably 30.0 or higher, still more preferably 60.0 or higher, and is preferably 500 or lower.

<Cerium oxide>

The cerium oxide can be $CeO_2$(cerium (IV) oxide) or $Ce_2O_3$(cerium (III) oxide). From the viewpoint of stability, $CeO_2$ is preferred.

The cerium oxide may be doped with polyvalent metal ions such as zirconium ions, praseodymium ions or the like.

The cerium oxide is preferably in particulate form.

In the case where the cerium oxide is in particulate form, the average particle size (D50) of the cerium oxide is preferably 1 nm or more, more preferably 5 nm or more, still more preferably 10 nm or more, particularly preferably 20 nm or more, and is preferably 3000 nm or less, more preferably 2500 nm or less, still more preferably 1800 nm or less, particularly preferably 1000 nm or less, most preferably 400 nm or less.

When the average particle size of the cerium oxide is 1 nm or more, it is easy to keep the cerium oxide in a stable dispersion state by suppressing agglomeration of the cerium oxide. When the average particle size of the cerium oxide is 3000 nm or less, the electrolyte membrane can be more improved in chemical durability.

The measurement method of the average particle size of the cerium oxide is as described below.

A dispersion containing the cerium oxide and the fluorinated polymer is subjected to dispersion treatment (dispersion treatment by a bead mill). After that, the particle size distribution of the dispersion is measured by a laser diffraction particle size analyzer (MT3300EXII-SDC, manufactured by MicrotracBEL Corporation) to obtain a volume-based 50% cumulative particle size of the cerium oxide. An arithmetic mean of three measurements of the cumulative 50% particle size is taken as D50.

The mass of the cerium oxide per 1 $cm^2$ of the electrolyte membrane is preferably 0.010 $mg/cm^2$ or more, more preferably 0.029 $mg/cm^2$ or more, still more preferably 0.043 $mg/cm^2$ or more, particularly preferably 0.088 $mg/cm^2$ or more, most preferably 0.132 $mg/cm^2$ or more, and is preferably 1.000 $mg/cm^2$ or less, more preferably 0.500 $mg/cm^2$ or less, still more preferably 0.300 $mg/cm^2$ or less.

When the mass of the cerium oxide is 0.010 $mg/cm^2$ or more, the electrolyte membrane is colored whitish so that it is easy to find foreign objects present in the electrolyte membrane. This makes it possible to, when the electrolyte membrane is applied to a water electrolyzer, use the electrolyte membrane avoiding the parts where the foreign objects are present, whereby the occurrence of pinholes in the electrolyte membrane due to the foreign objects can be suppressed.

When the mass of the cerium oxide is 1.000 $mg/cm^2$ or less, a lower electrolysis voltage can be achieved, and a membrane electrode assembly and a water electrolyzer can be provided at low cost.

<Method for producing electrolyte membrane>

For example, the following method may be mentioned as a method for producing the electrolyte membrane.

Using a mixture containing a polymer (hereinafter also referred to as a "fluorinated polymer (I')") of a fluorinated monomer having a group convertible to an ion exchange group (hereinafter also referred to as a "fluorinated monomer (I')"), the platinum-containing material and the cerium oxide, membranes P1 containing the fluorinated polymer (I'), the platinum-containing material and the cerium oxide are produced. The membrane P1, the woven fabric and the membrane P1 are stacked in this order and laminated together by laminating rolls or by a vacuum lamination apparatus to obtain a precursor membrane. Then, the groups convertible to ion exchange groups in the precursor membrane are converted to ion exchange groups. With this, the electrolyte membrane containing the fluorinated polymer (I), the platinum-containing material and the cerium oxide is obtained.

The following method may also be mentioned as another method for producing the electrolyte membrane.

The fluorinated polymer (I) is first produced by converting groups convertible to ion exchange groups in the fluorinated polymer (I') to ion exchange groups. The woven fabric is impregnated with a dispersion having the fluorinated polymer (I), the platinum-containing material and the cerium oxide dispersed therein, and then dried. With this, the electrolyte membrane containing the fluorinated polymer (I), the platinum-containing material and the cerium oxide is obtained.

By these methods, the electrolyte membrane having a single-layer structure (corresponding to the above-mentioned first electrolyte layer) is produced.

As a method for producing the electrolyte membrane having a multilayer structure, for example, the following method may be mentioned.

A membrane (precursor membrane) containing the fluorinated polymer (I') and the woven fabric is produced, and the groups convertible to ion exchange groups in the precursor membrane are converted to ion exchange group, to obtain an electrolyte membrane A containing the fluorinated polymer (I) and the woven fabric. Further, an electrolyte membrane B is obtained by casting a dispersion having the fluorinated polymer (I), the platinum-containing material and the cerium oxide dispersed therein.

The electrolyte membrane A and the electrolyte membrane B are staked in this order and laminated together by laminating rolls or by a vacuum lamination apparatus, thereby obtaining the electrolyte membrane containing the fluorinated polymer (I), the platinum-containing material, the cerium oxide and the woven fabric. By this method, the electrolyte membrane having a multilayer structure is produced. In the thus-produced multilayer-structured electrolyte membrane, the platinum-containing material and the cerium oxide are arranged biased to one side of the electrolyte

membrane.

The following method may also be mentioned as another method for producing the electrolyte membrane with a multilayer structure. The first electrolyte layer containing the fluorinated polymer (I), the platinum-containing material and the cerium oxide and an electrolyte layer (corresponding to the second electrolyte layer) containing no platinum-containing material or containing the platinum-containing material at a lower concentration than the first electrolyte layer are staked and laminated together by hot pressing. Here, the woven fabric is included in at least one of the first electrolyte layer and the second electrolyte layer. By this method, the electrolyte membrane having a multilayer structure is produced. In the thus-produced multilayer-structured electrolyte membrane, the platinum-containing material is arranged biased to one side of the electrolyte membrane.

As the fluorinated polymer (I'), preferred is a polymer (hereinafter also referred to as a "fluorinated polymer (S')") of a fluorinated monomer having a group convertible to a sulfonic acid group (hereinafter also referred to as a "fluorinated monomer (S')"). Particularly preferred is a copolymer of a fluorinated olefin and a fluorine-containing monomer having a group convertible to a sulfonic acid functional group.

The fluorinated polymer (S') will be now described in detail below.

As a copolymerization method for production of the fluorinated polymer (S'), a known method such as solution polymerization, suspension polymerization or emulsion polymerization may be employed.

The fluorinated olefin can be any of those mentioned above, and is preferably TFE in terms of the monomer production cost, the reactivity with other monomers and the ability to give the fluorinated polymer (S) with excellent properties.

The fluorinated olefin may be one type alone or a combination of two or more types.

The fluorinated monomer (S') may be a compound having at least one fluorine atom in the molecule, having an ethylenic double bond and having a group convertible to a sulfonic acid functional group.

As the fluorinated monomer (S'), a compound represented by the formula (2) is preferred in terms of the monomer production cost, the reactivity with other monomers and the ability to give the fluorinated polymer (S) with excellent properties.

Formula (2) $CF_2=CF-L-(A)_n$

In the formula (2), the definitions of L and n are as described above.

A is a group convertible to a sulfonic acid functional group. As the group convertible to a sulfonic acid functional group, preferred is a functional group that can be converted to a sulfonic acid functional group by hydrolysis. Specific examples of the group convertible to a sulfonic acid functional group include $-SO_2F$, $-SO_2Cl$ and - $SO_2Br$. When there are a plurality of A, the plurality of A may be the same or different.

As the compound represented by the formula (2), a compound represented by the formula (2-1), a compound represented by the formula (2-2), a compound represented by the formula (2-3) or a compound represented by the formula (2-4) is preferred.

Formula (2-1) $CF_2=CF-O-R^{f1}-A$

Formula (2-2) $CF_2=CF-R^{f1}-A$

Formula (2-3)

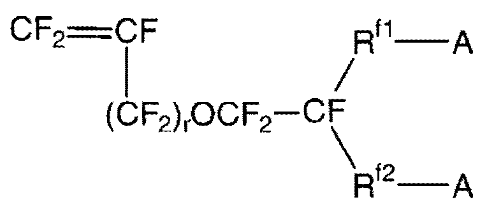

In these formulas, the definitions of $R^{f1}$, $R^{f2}$, r and A are as described above.

Formula (2-4)

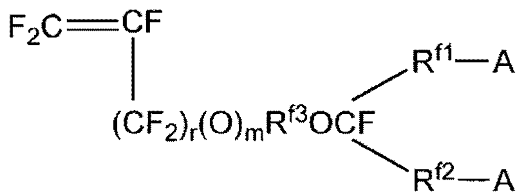

In this formula, the definitions of $R^{f1}$, $R^{f2}$, $R^{f3}$, r, m and A are as described above.

As the compound represented by the formula (2-1) and the compound represented by the formula (2-1), a compound represented by the formula (2-5) is preferred.

Formula (2-5) $CF_2=CF-(CF_2)_x-(OCF_2CFY)_y-O-(CF_2)_z-SO_{3F}$

The definitions of x, y, z and Y in this formula are the same as those in the formula (1-5).

Specific examples of the compound represented by the formula (2-1) include the following compounds where w is an integer of 1 to 8 and x is an integer of 1 to 5.

$CF_2=CF-O-(CF_2)_w-SO_2F$

$CF_2=CF-O-CF_2CF(CF_3)-O-(CF_2)_w-SO_2F$

$CF_2=CF-[O-CF_2CF(CF_3)]_x-SO_2F$

Specific examples of the compound represented by the formula (2-2) include the following compounds where w is an integer of 1 to 8.

$CF_2=CF-(CF_2)_w-SO_2F$

$CF_2=CF-CF_2-O-(CF_2)_w-SO_2F$

As the compound represented by the formula (2-3), a compound represented by the formula (2-3-1) is preferred.

Formula (2-3-1)

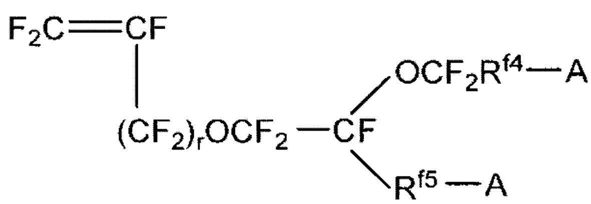

In this formula, the definitions of $R^{f4}$, $R^{f5}$, r and A are as described above.

Specific examples of the compound represented by the formula (2-3-1) include the following compounds.

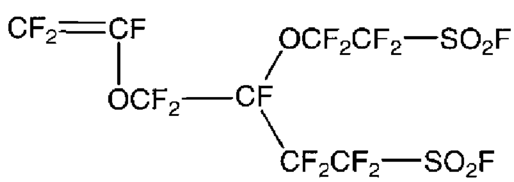

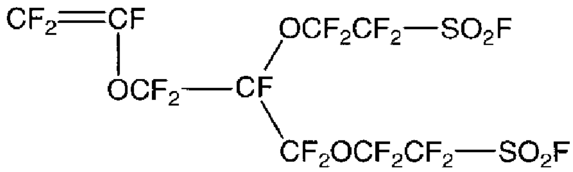

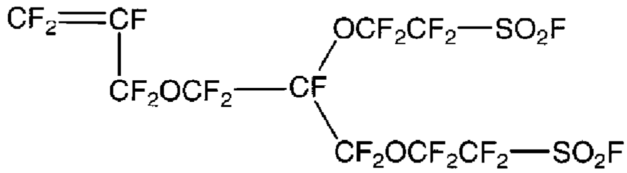

As the compound represented by the formula (2-4), a compound represented by the formula (2-4-1) is preferred.

Formula (2-4-1)

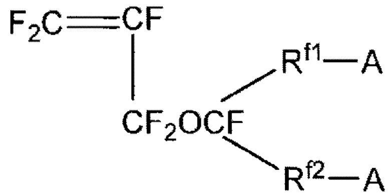

In this formula, the definitions of $R^{f1}$, $R^{f2}$ and A are as described above.

Specific examples of the compound represented by the formula (2-4-1) include the following compound.

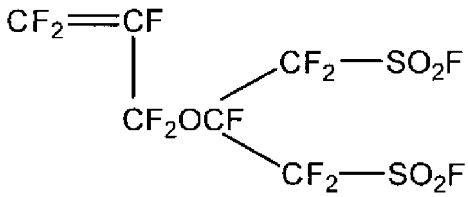

The fluorinated monomer (S') may be one type alone or a combination of two or more types.

For production of the fluorinated polymer (S'), an additional monomer may be used in addition to the fluorinated olefin and the fluorinated monomer (S'). The additional monomer can be any of those mentioned above.

The ion exchange capacity of the fluorinated polymer (I') can be adjusted by changing the content of groups convertible to sulfonic acid functional groups in the fluorinated polymer (I').

The conversion of groups convertible to ion exchange groups in the precursor membrane to ion exchange groups may be carried out by, for example, subjecting the precursor membrane to treatment such as hydrolysis and conversion to acid form.

In particular, preferred is contact treatment of the precursor membrane with an aqueous alkaline solution.

The contact treatment of the precursor membrane with the aqueous alkaline solution may be performed by, for example, immersion of the precursor membrane in the aqueous alkaline solution, spraying of the aqueous alkaline solution onto the surface of the precursor membrane, or the like.

The temperature of the aqueous alkaline solution is preferably 30°C or higher, more preferably 40°C or higher, and is preferably 100°C or lower. The contact time of the precursor membrane and the aqueous alkaline solution is preferably 3 minutes or more, more preferably 5 minutes or more, and is preferably 150 minutes or less, more preferably 50 minutes or less.

The aqueous alkaline solution preferably contains an alkali metal hydroxide, a water-soluble organic solvent and water.

Specific examples of the alkali metal hydroxide include sodium hydroxide and potassium hydroxide.

In the present specification, the water-soluble organic solvent refers to an organic solvent easily soluble in water. Specifically, preferred is an organic solvent with a solubility of 0.1 g or more in 1000 ml of water (20°C), and an organic solvent with a solubility of 0.5 g or more is more preferred. The water-soluble organic solvent preferably contains at least one kind selected from the group consisting of aprotic organic solvents, alcohols and amino alcohols, and more preferably

contains an aprotic organic solvent.

The water-soluble organic solvent may be one type alone or a combination of two or more types.

Specific examples of the aprotic organic solvents include dimethyl sulfoxide, N,N-dimethylformamide, N,N-dimethylacetamide, N-methyl-2-pyrrolidone and N-ethyl-2-pyrrolidone. Preferred is dimethyl sulfoxide.

Specific examples of the alcohols include methanol, ethanol, isopropanol, butanol, methoxyethoxyethanol, butoxyethanol, butylcarbitol, hexyloxyethanol, octanol, 1-methoxy-2-propanol and ethylene glycol.

Specific examples of the amino alcohols include ethanolamine, N-methyl ethanolamine, N-ethyl ethanolamine, 1-amino-2-propanol, 1-amino-3-propanol, 2-aminoethoxyethanol, 2-aminothioethoxyethanol and 2-amino-2-methyl-1-propanol.

The concentration of the alkali metal hydroxide in the aqueous alkaline solution is preferably 1 mass% or higher, more preferably 3 mass%, and is preferably 60 mass% or lower, more preferably 55 mass% or lower.

The content of the water-soluble organic solvent in the aqueous alkaline solution is preferably 1 mass% or more, more preferably 3 mass% or more, and is preferably 60 mass% or less, more preferably 55 mass% or less.

The concentration of water in the aqueous alkaline solution is preferably 39 to 80 mass%.

After the contact treatment of the precursor membrane with the aqueous alkaline solution, any treatment for removing the aqueous alkaline solution may be performed. The aqueous alkaline solution may be removed by, for example, washing, with water, the precursor membrane contact-treated with the aqueous alkaline solution.

After the contact treatment of the precursor membrane with the aqueous alkaline solution, the thus-obtained membrane may be further treated by contact with an aqueous acidic solution to convert the ion exchange groups to acid form.

The contact treatment of the precursor membrane with the aqueous acidic solution may be performed by, for example, immersion of the precursor membrane in the aqueous acidic solution or spraying of the aqueous acidic solution onto the surface of the precursor membrane.

The aqueous acidic solution preferably contains an acid component and water.

Specific examples of the acid component include hydrochloric acid and sulfuric acid.

[Membrane electrode assembly]

The membrane electrode assembly of the present invention includes the above-mentioned electrolyte membrane, a cathode catalyst layer provided on one surface of the electrolyte membrane and an anode catalyst layer provided on the other surface of the electrolyte membrane.

Fig. 2 is a cross-sectional view illustrating an example of the membrane electrode assembly of the present invention. In the example of Fig. 2, a membrane electrode assembly 20 includes: an anode 22 with a catalyst layer 26 and a gas diffusion layer 28; a cathode 24 with a catalyst layer 26 and a gas diffusion layer 28; and an electrolyte membrane 10 disposed between the anode 22 and the cathode 24 in contact with the respective catalyst layers 26.

Although the electrolyte membrane has a single-layer structure in the example of Fig. 2, the electrolyte membrane may alternatively have a multilayer structure. Specific examples and preferred embodiments of the electrolyte membrane having a multilayer structure are the same as those described above.

Fig. 3 is a schematic cross-sectional view illustrating an example of the membrane electrode assembly of the present invention in the case where the electrolyte membrane has a multilayer structure. The structure of a membrane electrode assembly 120 shown in Fig. 3 is similar to the structure of the membrane electrode assembly 20 shown in Fig. 2, except that an electrolyte membrane 100 is used in place of the electrolyte membrane 10 shown in Fig. 2. The electrolyte membrane 100 shown in Fig. 3 has a first electrolyte layer 100A and a second electrolyte layer 100B arranged in this order from the anode 22 side to the cathode 24 side.

The first electrolyte layer 100A contains the fluorinated polymer (I), the platinum-containing material and the cerium oxide.

The second electrolyte layer 100B contains the fluorinated polymer (I) and the cerium oxide. The second electrolyte layer 100B contains the platinum-containing material at a lower concentration than the first electrolyte layer or contains no platinum-containing material.

At least one of the first electrolyte layer 100A and the second electrolyte layer 100B contains the woven fabric.

Although the electrolyte membrane has a double-layer structure in the example of Fig. 3, the electrolyte membrane may have a structure of three or more layers.

In the example of Fig. 3, only the platinum-containing material is arranged biased to one side of the electrolyte membrane. In the electrolyte membrane included in the membrane electrode assembly of the present invention, both of the platinum-containing material and the cerium oxide may be arranged biased to one side of the electrolyte membrane.

<Anode and cathode>

Each of the anode and the cathode has a catalyst layer. In the example of Fig. 2, each of the anode 22 and the cathode 24 has a catalyst layer 26 and a gas diffusion layer 28.

The catalyst layer may be, for example, a layer containing a catalyst and a polymer having ion exchange groups.
Specific examples of the catalyst include: a supported catalyst having platinum, a platinum alloy or a platinum-based core-shell catalytic material supported on a carbon carrier; an iridium oxide catalyst; a composite oxide catalyst containing iridium and a different metal element; an iridium oxide alloy-based catalyst; and an iridium oxide-based core-shell catalytic material. As the carbon carrier, a carbon black powder may be mentioned.
As the polymer having ion exchange groups, a fluorinated polymer having ion exchange groups may be mentioned. Specific examples of the fluorinated polymer having ion exchange groups may be the same as those of the fluorinated polymer (I) mentioned above.
The mass of the catalyst metal per 1 $cm^2$ of the catalyst layer is preferably 0.05 $mg/cm^2$ or more, more preferably more than 0.05 $mg/cm^2$, still more preferably 0.2 $mg/cm^2$ or more, and is preferably 4 $mg/cm^2$ or less, more preferably 2 $mg/cm^2$ or less, still more preferably 1 $mg/cm^2$ or less.
The mass ratio of the catalyst to the polymer having ion exchange groups (mass of catalyst/mass of polymer having ion exchange groups) in the catalyst layer is preferably from 2 to 6.
The catalyst layer preferably contains a thickener from the viewpoint of dispersibility improvement and agglomeration suppression of the catalyst.
As specific examples of the thickener, various thickeners may be mentioned including urethane-based thickeners, polyacrylate-based thickeners, polyamide-based thickeners, cellulose-based thickeners and clay minerals such as bentonite. Further, ZEORORA (registered trademark) H (manufactured by Zeon Corporation) and the like are also usable as the thickener.
In the case where the catalyst layer contains a thickener, the content of the thickener to the total mass of the after-mentioned catalyst layer forming ink is preferably 2 mass% or more, more preferably 3 mass% or more, and is preferably 7 mass% or less, more preferably 6 mass% or less.
The gas diffusion layer functions to promptly diffuse gas generated from the catalyst layer to the outside of the catalyst layer, and also functions as a current collector. For example, the gas diffusion layer can be in the form of a carbon paper, a carbon cloth, a carbon felt, a sintered product of titanium oxide fiber, a sintered product of titanium oxide particles, or the like. In view of the facts that: the anode side is high in potential; and carbon materials are oxidized during use, it is preferred to use a sintered product of titanium oxide fiber or a sintered product of titanium oxide particles. A sintered product of titanium oxide may be plated with platinum or the like as necessary.
The cathode gas diffusion layer may be made water repellent by applying PTFE or the like.
Although the membrane electrode assembly of Fig. 2 has gas diffusion layers 28, the gas diffusion layers are optional, and the membrane electrode assembly may have no gas diffusion layers.
With a view to obtaining more excellent effects of the present invention, each of the thicknesses of the anode and the cathode is preferably 5 μm or more, and is preferably 100 μm or less, more preferably 50 μm or less, still more preferably 30 μm or less, particularly preferably 15 μm or less.
Each of the thicknesses of the anode and the cathode is determined by observing, with a laser microscope, a cross section of the membrane electrode assembly cut in the thickness direction, as an arithmetic mean of thickness measurements at arbitrary 20 points on the cross-sectional image of the membrane electrode assembly.

<Method for producing membrane electrode assembly>

A method for producing the membrane electrode assembly includes forming the cathode catalyst layer on one surface of the electrolyte membrane and forming the anode catalyst layer on the other surface of the electrolyte membrane.
For example, the membrane electrode assembly may be produced by using a laminate having the anode catalyst layer on a releasable base material (such as an ETFE sheet) and a laminate having the cathode catalyst layer on a releasable base material (such as an ETFE sheet), bonding the catalyst layers to both sides of the electrolyte membrane and peeling off the releasable base materials.
In each of the above-mentioned laminates, the gas diffusion layer may be provided between the catalyst layer and the releasable base material. In this case, the gas diffusion layer is arranged on the opposite side of the catalyst layer from the electrolyte membrane.
The catalyst layers may be formed by applying a catalyst layer forming ink to predetermined areas (such as surfaces of the releasable base materials), followed by drying as necessary. The catalyst layer forming ink is a dispersion of the polymer having ion exchange groups and the catalyst in a dispersion medium.

<Applications>

The membrane electrode assembly of the present invention is suitably applicable to a polymer electrolyte membrane water electrolyzer.

[Water electrolyzer]

The water electrolyzer of the present invention includes the above-mentioned membrane electrode assembly, a water supply unit for supplying water to the anode catalyst layer side and a power supply unit for electrical connection between the anode catalyst layer side and the cathode catalyst layer side.
In the water electrolyzer of the present invention, when a direct-current voltage is applied by the power supply unit in a state that water is supplied to the anode catalyst layer side by the water supply unit, water is decomposed into oxygen and protons on the anode catalyst layer side. The protons transferring to the cathode catalyst layer side through the electrolyte membrane receive electrons to form hydrogen on the cathode catalyst layer side.
The water electrolyzer of the present invention may have the same configuration as that of a known water electrolyzer (for example, an oxygen recovery member to recover the generated oxygen and a hydrogen recovery member to recover the generated hydrogen) except that it has the above members.

EXAMPLES

Now, the present invention will be described in further detail with reference to Examples. Ex. 1 to 5 and Ex. 7 to 10 correspond to Examples of the present invention; and Ex. 6 corresponds to Comparative Example. It should be understood that the present invention is by no means restricted thereto.

[Ion exchange capacity of fluorinated polymer]

The weight of a fluorinated polymer was measured, after 24 hours of incubation in a glove box purged with dry nitrogen, as the dry mass of the fluorinated polymer. Then, the fluorinated polymer was immersed in a 2 mol/L aqueous solution of sodium chloride at 60°C for 1 hour. After the fluorinated polymer was washed with ultrapure water and recovered, the solution in which the fluorinated polymer had been immersed was titrated with 0.1 mol/L aqueous sodium hydroxide to determine the ion exchange capacity of the fluorinated polymer (meq/g dry resin).
In the table given later, IEC (meq/g) means ion exchange capacity (meq/g dry resin).

[Thickness of electrolyte membrane]

The thickness of an electrolyte membrane was measured on a magnified cross-sectional image of the electrolyte membrane taken (at an objective lens magnification of 50) by a laser microscope (model "VK-X1000", manufactured by KEYENCE CORPORATION) under the conditions of a temperature of 23°C and a relative humidity of 50%RH.

[Hydrogen concentration in oxygen]

A membrane electrode assembly was sandwiched between platinum-coated sintered titanium fiber layers (manufactured by Bekaert) having a thickness of 0.25 mm and a porosity of 60%, and then, mounted for evaluation in a single cell having an electrode area of 16 $cm^2$ and using platinum-coated titanium plates with straight channels as separators. The membrane electrode assembly was, when sandwiched, tightened so as to apply a pressure of 1.5 MPa to the electrode area.
To fully hydrate the polymer electrolyte membrane and the ionomers in the electrodes, pure water at 60°C and ordinary pressure with an electrical conductivity of 1.0 μS/cm or less was supplied to both the anode side and the cathode side at a flow rate of 50 mL/min for 8 hours. Then, water hydrolysis was carried out as preliminary operation for 4 hours by supplying pure water at 60°C with an electrical conductivity of 1.0 μS/cm or less to the anode side at a flow rate of 50 mL/min, with the back pressures on the anode side and on the cathode side kept at ordinary pressure, while maintaining the electric current at 16 A (current density 1 A/$cm^2$) by a high current potentio/garvanostat HCP-803 (manufactured by BioLogic). Water hydrolysis was further carried out as main measurement operation by increasing the electric current by 2A in a stepwise manner from 0 to 32 A (current density from 0 to 2 A/$cm^2$).
After that, the electric current was maintained at 3.2 A (current density 0.2 A/$cm^2$) for 12 hours by the high current potentio/garvanostat HCP-803 (manufactured by BioLogic) while supplying pure water at 60°C and ordinary pressure with an electrical conductivity of 1.0 μS/cm or less to the cell at a flow rate 50 mL/min, with the back pressures on the anode side and the cathode side kept at ordinary pressure. After the lapse of 12 hours, water was separated from the gas generated from the anode side, and the concentration of hydrogen in the gas was measured by a micro GC (Agilent 490, manufactured by Agilent Technologies). The hydrogen concentration in oxygen ($H_2$ concentration in $O_2$) was evaluated according to the following criteria. The lower the $H_2$ concentration in $O_2$, the more excellent the low gas permeability of the electrolyte membrane.

◎: Lower than 0.05 vol%
○: Higher than or equal to 0.05 vol% and lower than 0.10 vol%
×: Higher than or equal to 0.10 vol%

[Fluorine release rate]

A membrane electrode assembly was sandwiched between platinum-coated sintered titanium fiber layers (manufactured by Bekaert) having a thickness of 0.25 mm and a porosity of 60%, and then, mounted for evaluation in a single cell having an electrode area of 16 $cm^2$ and using platinum-coated titanium plates with straight channels as separators. The membrane electrode assembly was, when sandwiched, tightened so as to apply a pressure of 1.5 MPa to the electrode area.

To fully hydrate the polymer electrolyte membrane and the ionomers in the electrodes, pure water at 60°C and ordinary pressure with an electrical conductivity of 1.0 μS/cm or less was supplied to both the anode catalyst layer side and the cathode catalyst layer side at a flow rate of 50 mL/min for 8 hours. Then, water electrolysis was carried out as preliminary operation for 4 hours by supplying pure water at 60°C with an electrical conductivity of 1.0 μS/cm or less to the anode catalyst layer side at a flow rate of 50 mL/min, with the back pressures on the anode catalyst layer side and the cathode catalyst layer side kept at ordinary pressure, while maintaining the electric current at 16 A (current density 1 A/$cm^2$) by a high current potentio/garvanostat HCP-803 (manufactured by BioLogic). The water electrolysis operation was continued at a current density of 1 A/$cm^2$ for 1000 hours by supplying pure water to the anode catalyst layer at a flow rate of 150 mL/min, with the back pressures on the anode side and the cathode side kept at 50 kPa.

The drainage discharged from the cathode catalyst layer side over a period from 500 hours to 1000 hours after the preliminary operation was sampled. The content of fluoride ions in the drainage was determined by ion chromatography and averaged to calculate the average fluoride ion content per unit electrode area per unit time. The average fluorine ion content was evaluated as the fluorine release rate according to the following criteria. The lower the fluorine release rate, the more suppressed the decomposition of the fluorinated polymer, the more excellent the chemical durability of the electrolyte membrane.

◎: Lower than $1.0 \times 10^{-6}$ mg/(h·$cm^2$)
○: Higher than or equal to $1.0 \times 10^{-6}$ mg/(h·$cm^2$) and lower than $3.0 \times 10^{-6}$ mg/(h·$cm^2$)
×: Higher than or equal to $3.0 \times 10^{-6}$ mg/(h·$cm^2$)

[Pinholes]

A membrane electrode assembly was heat-treated at 150°C for 15 minutes and set in a water electrolysis evaluation jig EH50-25 (manufactured by Greenlight Innovation).

To fully hydrate the polymer electrolyte membrane and the ionomers in the electrodes, pure water at 80°C and ordinary pressure with an electrical conductivity of 1.0 μS/cm or less was supplied to both the anode side and the cathode side at a flow rate of 50 mL/min for 12 hours. Then, the cathode side was purged with nitrogen.

After the nitrogen purge, the evaluation jig with the membrane electrode assembly was operated by a direct current power source PWR1600L manufactured by Kikusui Electronics Corporation at a current density of 2 A/$cm^2$ for 300 hours by supplying pure water at 80°C and ordinary pressure with an electrical conductivity of 1.0 μS/cm or less to the anode side at a flow rate of 50 mL/min and keeping the pressure of gas generated from the cathode side at atmospheric pressure.

After the operation, the number of pinholes (perforations) in the electrolyte membrane of the membrane electrode assembly was measured by a pinhole detector (model "TRS-70", manufactured by Sanko Electronic Laboratory Co., Ltd.)

◎: No pinholes
○: One or two pinholes
×: Three or more pinholes

[Ex. 1]

By copolymerization of $CF_2=CF_2$ and a monomer represented by the following formula (X), a fluorinated polymer (I'-1) (ion exchange capacity: 1.25 meq/g dry resin) was produced. Here, the ion exchange capacity in the parentheses expresses the ion exchange capacity of a fluorinated polymer obtained by hydrolyzing the fluorinated polymer (I'-1) according to the procedure described later.

$$CF_2=CF\text{-}O\text{-}CF_2CF(CF_3)\text{-}O\text{-}CF_2CF_2\text{-}SO_2F \qquad (X)$$

Next, a mixture containing the fluorinated polymer (I'-1), platinum black ("TEC90300", manufactured by TANAKA Kikinzoku Kogyo K.K., platinum-containing material) and cerium oxide ($CeO_2$, manufactured by FUJIFILM Wako Pure Chemical Corporation, primary particle size: less than 10 nm) was applied by melt extrusion to base films of linear low density polyethylene (LLDPE) (melting point: 110 to 120°C), thereby obtaining film-attached base materials Y1 in which films $\alpha$1 (film thickness: 45 $\mu$m) of the mixture were respectively formed on the base films.

Using 18.6-denier yarns of PFA as warp yarns and weft yarns, a woven fabric A1 was produced by plain weaving such that the density of the PFA yarns was 100 yarns/inch. The fabric weight of the woven fabric A1 was 16.3 g/$m^2$. The warp yarns and weft yarns used were in the form of slit yarns.

The film-attached base material Y1, the woven fabric A1 and the film-attached base material Y1 was stacked in this order. At this time, the film-attached base materials Y1 were arranged such that the films $\alpha$1 of the film-attached base materials Y were brought into contact with the woven fabric A1.

These stacked members were thermally press-bonded together by a flat press machine at a temperature of 160°C and a surface pressure of 30 MPa/$m^2$ for 10 minutes, and then, the base films on both sides were peeled off at a temperature of 50°C to obtain a precursor membrane.

The precursor membrane was immersed in a solution of dimethyl sulfoxide/potassium hydroxide/water = 30/5.5/64.5 (mass ratio) at 95°C for 30 minutes to convert groups convertible to sulfonic acid functional groups in the precursor membrane by hydrolysis to K-type sulfonic acid functional groups, and washed with water. The thus-obtained membrane was immersed in 1M sulfuric acid to convert the terminal groups from K-type to H-type, and dried to obtain an electrolyte membrane 1 (thickness: 90 $\mu$m) of Ex. 1.

A polymer (ion exchange capacity: 1.10 meq/g dry resin) produced by copolymerization of $CF_2$=$CF_2$ and the above-mentioned monomer (X), followed by conversion to acid form through hydrolysis and acid treatment, was dispersed in a solvent of water/ethanol in a ratio of 40/60 (mass%) to obtain a dispersion with a solid content of 26.0% (hereinafter also referred to also as a "dispersion Y").

The obtained dispersion Y (33.0 g) was mixed with ethanol (18.06 g) and ZEORORA H (manufactured by Zeon Corporation) (10.58 g) by a planetary centrifugal mixer (THINKY MIXER, manufactured by THINKY CORPORATION) at 2200 rpm for 5 minutes. The mixed composition (54.06 g) was mixed with ethanol (46.44 g) and water (75.75 g) and further mixed with an iridium oxide catalyst (40.0 g) (manufactured by TANAKA Kikinzoku Kogyo K.K.) containing 74.8 mass% iridium and having a specific surface area of 100 $m^2$/g. The resulting mixed composition was processed in a planetary bead mill (rotation speed: 300 rpm) for 90 minutes to obtain an anode catalyst ink with a solid content of 22 mass%.

The anode catalyst ink was applied by an applicator to an ETFE sheet such that the amount of iridium applied was 1.0 mg/$cm^2$, dried at 80°C for 10 minutes and heat-treated at 150°C for 15 minutes, thereby obtaining an anode layer catalyst decal.

A supported catalyst having 46 mass% platinum supported on a carbon powder ("TEC10E50E" manufactured by TANAKA Kikinzoku Kogyo K.K.) (11 g) was mixed and milled with water (59.4 g) and ethanol (39.6 g) in an ultrasonic homogenizer to obtain a catalyst dispersion.

To the catalyst dispersion, a previously prepared mixture (29.2 g) of the dispersion Y (20.1 g), ethanol (11 g) and ZEORORA H (manufactured by Zeon Corporation) (6.3 g) was added. Further, water (3.66 g) and ethanol (7.63 g) were added to the catalyst dispersion. The obtained dispersion was mixed in a paint conditioner for 60 minutes to obtain a cathode catalyst ink with a solid content of 10.0 mass%.

The cathode catalyst ink was applied by a die coater to an ETFE sheet, dried at 80°C and heat-treated at 150°C for 15 minutes, thereby obtaining a cathode catalyst layer decal with a platinum content of 0.4 mg/$cm^2$.

The catalyst layer of the anode catalyst layer decal was arranged to face one side of the electrolyte membrane 1, and the catalyst layer of the cathode catalyst layer decal was arranged to face the other side of the electrolyte membrane. Then, the anode catalyst layer, the electrolyte membrane 1 and the cathode catalyst layer were laminated together by hot pressing for 10 minutes at a press temperature of 150°C and a pressure of 3 MPa. After cooling to 70°C and releasing the pressure, the resulting laminate was taken out, and the ETFE sheets of the anode catalyst layer decal and the cathode catalyst layer decal were peeled off to obtain a membrane electrode assembly having an electrode area of 16 $cm^2$. The above-mentioned evaluations were made on the thus-obtained membrane electrode assembly. The results are shown in Table 1.

In the case where the presence of foreign objects in the electrolyte membrane 1 was confirmed by visual inspection, the electrolyte membrane 1 from which the foreign objects had been removed was used for production of the membrane electrode assembly. The same applies to the following Ex.

[Ex. 2]

Using a mixture in which the contents of the respective components were appropriately adjusted so as to provide an electrolyte membrane with a platinum-containing material content (mg/$cm^2$) and a cerium oxide content (mass%) as

shown in Table 1, film-attached base materials Y2 having films α2 (film thickness: 45 μm) formed on respective base films were obtained.

An electrolyte membrane 2 (thickness: 90 μm) of Ex. 2 was obtained in the same manner as in Ex. 1, except that the film-attached base materials Y2 were used in place of the film-attached base materials Y1.

A membrane electrode assembly of Ex. 2 was obtained in the same manner as in Ex. 1, except that the electrolyte membrane 2 was used in place of the electrolyte membrane 1. The above-mentioned evaluations were made on the membrane electrode assembly of Ex. 2. The results are shown in Fig. 1.

[Ex. 3]

A mixture containing the fluorinated polymer (I'-1), platinum black ("TEC90300", manufactured by TANAKA Kikinzoku Kogyo K.K., platinum-containing material) and cerium oxide ($CeO_2$, manufactured by FUJIFILM Wako Pure Chemical Corporation, primary particle size: less than 10 nm) was applied by melt extrusion to base films of linear low density polyethylene (LLDPE) (melting point: 110 to 120°C), thereby obtaining film-attached base materials Y3 in which films α3 (film thickness: 30 μm) of the mixture were respectively formed on the base films.

An electrolyte membrane 3 (thickness: 60 μm) of Ex. 3 was obtained in the same manner as in Ex. 1, except that the film-attached base materials Y3 were used in place of the film-attached base materials Y1.

A membrane electrode assembly of Ex. 3 was obtained in the same manner as in Ex. 1, except that the electrolyte membrane 3 was used in place of the electrolyte membrane 1. The above-mentioned evaluations were made on the membrane electrode assembly of Ex. 3. The results are shown in Fig. 1.

[Ex. 4]

Using a mixture in which the contents of the respective components were appropriately adjusted so as to provide an electrolyte membrane with a platinum-containing material content ($mg/cm^2$) and a cerium oxide content (mass%) as shown in Table 1, film-attached base materials Y4 having films α4 (film thickness: 30 μm) formed on respective base films were obtained.

An electrolyte film 4 (thickness: 60 μm) of Ex. 4 was obtained in the same manner as in Ex. 3, except that the film-attached base materials Y4 were used in place of the film-attached base materials Y3.

A membrane electrode assembly of Ex. 4 was obtained in the same manner as in Ex. 3, except that the electrolyte membrane 4 was used in place of the electrolyte membrane 3. The above-mentioned evaluations were made on the membrane electrode assembly of Ex. 4. The results are shown in Fig. 1.

[Ex. 5]

Using a mixture in which the contents of the respective components were appropriately adjusted so as to provide an electrolyte membrane with a platinum-containing material content ($mg/cm^2$) and a cerium oxide content (mass%) as shown in Table 1, film-attached base materials Y5 having films α5 (film thickness: 30 μm) formed on respective base films were obtained.

An electrolyte film 5 (thickness: 60 μm) of Ex. 5 was obtained in the same manner as in Ex. 3, except that the film-attached base materials Y5 were used in place of the film-attached base materials Y3.

A membrane electrode assembly of Ex. 5 was obtained in the same manner as in Ex. 3, except that the electrolyte membrane 5 was used in place of the electrolyte membrane 3. The above-mentioned evaluations were made on the membrane electrode assembly of Ex. 5. The results are shown in Fig. 1.

[Ex. 6]

The fluorinated polymer (I'-1) was applied by melt extrusion to base films of linear low density polyethylene (LLDPE) (melting point: 110 to 120°C), thereby obtaining film-attached base materials Y6 in which films α6 (film thickness: 45 μm) of the fluorinated polymer were respectively formed on the base films.

An electrolyte membrane 6 (thickness: 90 μm) of Ex. 6 was obtained in the same manner as in Ex. 1, except that the film-attached base materials Y6 were used in place of the film-attached base materials Y1.

A membrane electrode assembly of Ex. 6 was obtained in the same manner as in Ex. 1, except that the electrolyte membrane 6 was used in place of the electrolyte membrane 1. The above-mentioned evaluations were made on the membrane electrode assembly of Ex. 6. The results are shown in Fig. 1.

[Ex. 7]

In Ex. 7, a membrane electrode assembly was produced by the following procedure and then evaluated.

Using a mixture in which the contents of the respective components were appropriately adjusted so as to provide an electrolyte membrane with a platinum-containing material content of 0.015 mg/cm$^2$ and a cerium oxide content of 0.008 mg/cm$^2$, film-attached base materials Y7 having films $\alpha$7 (film thickness: 30 $\mu$m) formed on respective base films were obtained.

An electrolyte membrane 7 (thickness: 60 $\mu$m) of Ex. 7 was obtained in the same manner as in Ex. 3, except that the film-attached base materials Y7 were used in place of the film-attached base materials Y3.

The membrane electrode assembly of Ex. 7 was obtained in the same manner as in Ex. 3, except that the electrolyte membrane 7 was used in place of the electrolyte membrane 3. The above-mentioned evaluations were made on the membrane electrode assembly of Ex. 7. The results are shown in Fig. 1.

[Ex. 8]

In Ex. 8, a membrane electrode assembly was obtained by the following procedure and then evaluated.

Using a mixture in which the contents of the respective components were appropriately adjusted so as to provide an electrolyte membrane with a platinum-containing material content of 0.030 mg/cm$^2$ and a cerium oxide content of 0.010 mg/cm$^2$, film-attached base materials Y8 having films $\alpha$8 (film thickness: 30 $\mu$m) formed on respective base films were obtained.

An electrolyte membrane 8 (thickness: 60 $\mu$m) of Ex. 8 was obtained in the same manner as in Ex. 3, except that the film-attached base materials Y8 were used in place of the film-attached base materials Y3.

The membrane electrode assembly of Ex. 8 was obtained in the same manner as in Ex. 3, except that the electrolyte membrane 8 was used in place of the electrolyte membrane 3. The above-mentioned evaluations were made on the membrane electrode assembly of Ex. 8. The results are shown in Fig. 1.

[Ex. 9]

In Ex. 9, a membrane electrode assembly was obtained by the following procedure and then evaluated.

Using a mixture in which the contents of the respective components were appropriately adjusted so as to provide an electrolyte membrane with a platinum-containing material content of 0.030 mg/cm$^2$ and a cerium oxide content of 0.008 mg/cm$^2$, film-attached base materials Y9 having films $\alpha$9 (film thickness: 30 $\mu$m) formed on respective base films were obtained.

An electrolyte membrane 9 (thickness: 60 $\mu$m) of Ex. 9 was obtained in the same manner as in Ex. 3, except that the film-attached base materials Y9 were used in place of the film-attached base materials Y3.

The membrane electrode assembly of Ex. 9 was obtained in the same manner as in Ex. 3, except that the electrolyte membrane 9 was used in place of the electrolyte membrane 3. The above-mentioned evaluations were made on the membrane electrode assembly of Ex. 9. The results are shown in Fig. 1.

[Ex. 10]

In Ex. 10, a membrane electrode assembly was obtained by the following procedure and then evaluated.

Using a mixture in which the contents of the respective components were appropriately adjusted so as to provide an electrolyte membrane with a platinum-containing material content of 0.030 mg/cm$^2$ and a cerium oxide content of 0.088 mg/cm$^2$, a film-attached base material Y10 having a film $\alpha$10 (film thickness: 30 $\mu$m) formed on a base film was obtained. In other words, the film-attached base material Y10 was obtained in the same manner as the film-attached base material Y5, except that the contents of the platinum-containing material and the cerium oxide in the film $\alpha$10 of the base material Y10 were twice as much mass% as those in the film $\alpha$5 of the base material Y5.

Further, a film-attached base material Y11 having a film $\alpha$11 (film thickness: 30 $\mu$m) formed on a base film was obtained in the same manner as the film-attached base material Y6, except that the film thickness was adjusted to 30 $\mu$m during the preparation of the film-attached base material Y11.

An electrolyte membrane 10 (thickness: 60 $\mu$m) of Ex. 10 was obtained in the same manner as in Ex. 3, except that the film-attached base material Y10, the woven fabric A1 and the film-attached base material Y11 were arranged in this order.

A membrane electrode assembly of Ex. 10 was obtained in the same manner as in Ex. 3, except that the electrolyte membrane 10 was used in place of the electrolyte membrane 3. The above-mentioned evaluations were made on the membrane electrode assembly of Ex. 10. Here, the anode catalyst layer was arranged on the film $\alpha$10-side of the electrolyte membrane 10. The results are shown in Table 1.

[Table 1]

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Electrolyte membrane | Thickness (μm) | 90 | 90 | 60 | 60 | 60 | 90 | 60 | 60 | 60 | 60 |
| | Presence or absence of woven fabric | Present | Present | Present | Present | Present | Present | Present | Present | Present | Present |
| | IEC (meq/g) | 1.25 | 1.25 | 1.25 | 1.25 | 1.25 | 1.25 | 1.25 | 1.25 | 1.25 | 1.25 |
| | Mass ($mg/cm^2$) of platinum-containing material | 0.015 | 0.0030 | 0.015 | 0.015 | 0.030 | 0.000 | 0.015 | 0.030 | 0.030 | 0.030 |
| | Cerium oxide content ($mg/cm^2$) | 0.043 | 0.132 | 0.029 | 0.010 | 0.088 | 0.000 | 0.008 | 0.010 | 0.008 | 0.088 |
| | Cerium oxide content (mass%) | 0.23 | 0.70 | 0.23 | 0.08 | 0.70 | 0.00 | 0.07 | 0.08 | 0.07 | 0.70 |
| Evaluation results | $H_2$ Concentration in $O_2$ | ○ | ◎ | ○ | ○ | ○ | × | ○ | ○ | ○ | ◎ |
| | Fluorine release rate | ○ | ◎ | ○ | ○ | ○ | × | ○ | ○ | ○ | ○ |
| | Pinholes | ◎ | ◎ | ◎ | ○ | ◎ | × | × | ○ | × | ◎ |

As shown in Table 1, the electrolyte membrane containing the fluorinated polymer having ion exchange groups, the platinum-containing material, the cerium oxide and the woven fabric were excellent in low gas permeability and chemical durability (Ex. 1 to 5).

As is seen from comparison of Ex. 2 and the other Ex., the electrolyte membrane was more excellent in low gas permeability and chemical durability when the mass of the platinum-containing material per 1 $cm^2$ of the electrolyte membrane was 0.030 $mg/cm^2$ or more and the mass of the cerium oxide per 1 $cm^2$ of the electrolyte membrane was 0.132 $mg/cm^2$ or more.

As is seen from comparison of Ex. 4 and Ex. 7, the occurrence of pinholes was suppressed when the mass of the cerium oxide per 1 $cm^2$ of the electrolyte membrane was 0.010 $mg/cm^2$ or more.

As is seen from comparison of Ex. 8 and Ex. 9, the occurrence of pinholes was also suppressed when the mass of the cerium oxide per 1 $cm^2$ of the electrolyte membrane was 0.010 $mg/cm^2$ or more.

The entire disclosure of Japanese Patent Application No. 2022-145366 filed on September 13, 2022 including specification, claims, drawings and summary is incorporated herein by reference in its entirety.

REFERENCE SYMBOLS

1, 10, 100: Electrolyte membrane
20, 120: Membrane electrode assembly
22: Anode
24: Cathode
26: Catalyst layer
28: Gas diffusion layer
100A: First electrolyte layer
100B: Second electrolyte layer
A1, C1: Surface
B1: Depth position
$T_1$, Tx: Distance
X, Y: Region

## Claims

1. A polymer electrolyte membrane comprising a fluorinated polymer having ion exchange groups, a platinum-containing material, cerium oxide and a woven fabric.

2. The polymer electrolyte membrane according to Claim 1, wherein the ion exchange capacity of the fluorinated polymer is from 0.90 to 2.00 meq/g dry resin.

3. The polymer electrolyte membrane according to Claim 1, wherein the mass of the cerium oxide per 1 $cm^2$ of the polymer electrolyte membrane is 0.010 $mg/cm^2$ or more.

4. The polymer electrolyte membrane according to Claim 1, wherein the mass of the cerium oxide per 1 $cm^2$ of the polymer electrolyte membrane is 0.132 $mg/cm^2$ or more.

5. The polymer electrolyte membrane according to Claim 1,

   wherein the mass of the platinum-containing material per 1 $cm^2$ of the polymer electrolyte membrane is 0.030 $mg/cm^2$ or more, and
   wherein the mass of the cerium oxide per 1 $cm^2$ of the polymer electrolyte membrane is 0.132 $mg/cm^2$ or more.

6. The polymer electrolyte membrane according to Claim 1, wherein the platinum-containing material is arranged biased to one side of the polymer electrolyte membrane.

7. The polymer electrolyte membrane according to Claim 1, wherein the platinum-containing material is supported on a carrier.

**8.** The polymer electrolyte membrane according to Claim 1, wherein the ion exchange groups of the fluorinated polymer are sulfonic acid functional groups.

**9.** The polymer electrolyte membrane according to Claim 1, wherein the fluorinate polymer comprises at least one type selected from the group consisting of units represented by the formula (1-3) and units represented by the formula (1-4):

Formula (1-3)

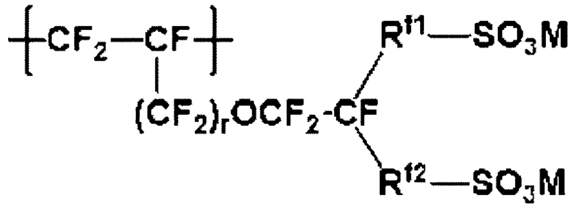

Formula (1-4)

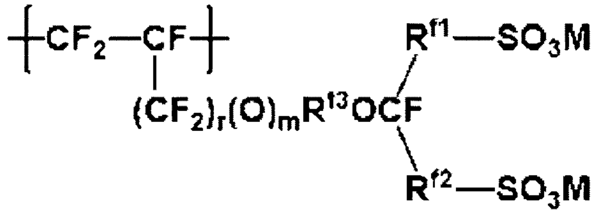

where $R^{f1}$ is a perfluoroalkylene group which may have an oxygen atom between carbon atoms; $R^{f2}$ is a single bond or a perfluoroalkylene group which may have an oxygen atom between carbon atoms; $R^{f3}$ is a single bond or a perfluoroalkylene group which may have an oxygen atom between carbon atoms; r is 0 or 1; m is 0 or 1; and M is each independently a hydrogen atom, an alkali metal or a quaternary ammonium cation.

**10.** The polymer electrolyte membrane according to Claim 1, wherein the woven fabric is made of a material selected from the group consisting of polytetrafluoroethylene, a tetrafluoroethylene-perfluoroalkyl vinyl ether copolymer, polyether ether ketone and polyphenylene sulfide.

**11.** A membrane electrode assembly comprising:

the polymer electrolyte membrane as defined in any one of Claims 1 to 10;
a cathode catalyst layer provided on one surface of the polymer electrolyte membrane; and
an anode catalyst layer provided on the other surface of the polymer electrolyte membrane.

**12.** A water electrolyzer comprising:

the membrane electrode assembly as defined in Claim 11,
a power supply unit connecting the cathode catalyst layer side and the anode catalyst layer side of the membrane electrode assembly; and
a water supply unit to supply water to the anode catalyst layer side.

**13.** A method for producing a membrane electrode assembly, the membrane electrode assembly comprising the polymer electrolyte membrane as defined in any one of Claims 1 to 10, a cathode catalyst layer and an anode catalyst layer, the method comprising forming the cathode catalyst layer on one surface of the polymer electrolyte membrane and forming the anode catalyst layer on the other surface of the polymer electrolyte membrane.

Fig. 1

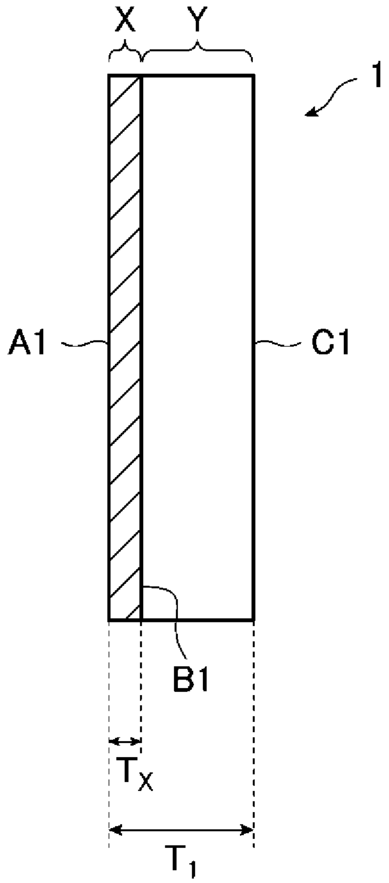


Fig. 2

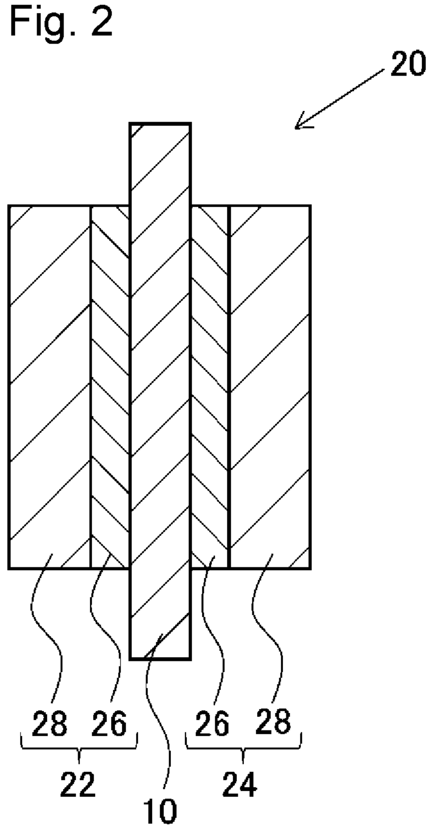

Fig. 3

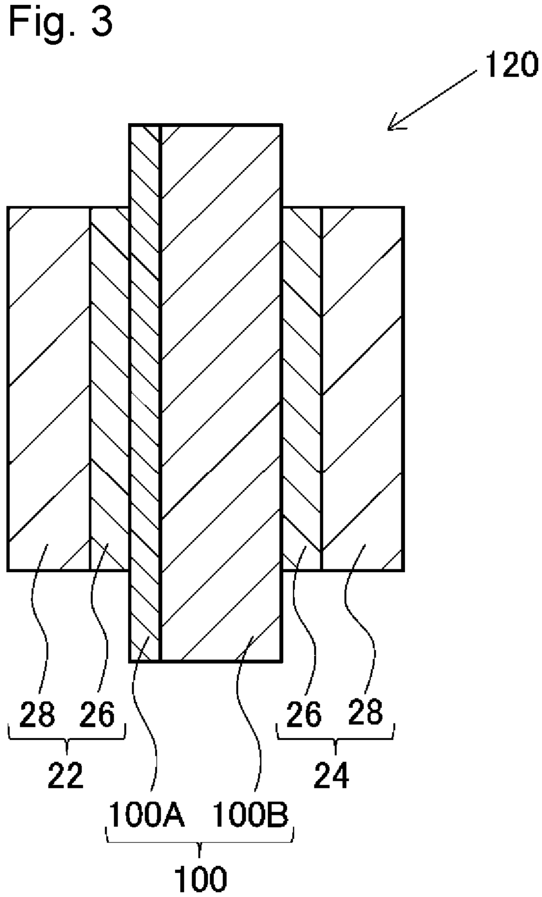

## INTERNATIONAL SEARCH REPORT

International application No.
**PCT/JP2023/033211**

**A. CLASSIFICATION OF SUBJECT MATTER**

***C25B 13/08***(2006.01)i; ***C25B 1/04***(2021.01)i; ***C25B 9/00***(2021.01)i; ***C25B 9/23***(2021.01)i; ***C25B 9/65***(2021.01)i; ***C25B 11/052***(2021.01)i; ***C25B 11/056***(2021.01)i; ***C25B 11/065***(2021.01)i; ***C25B 13/04***(2021.01)i; ***H01B 1/06***(2006.01)i
FI: C25B13/08 302; H01B1/06 A; C25B1/04; C25B9/00 A; C25B9/23; C25B9/65; C25B13/04 301; C25B13/08 303; C25B11/052; C25B11/056; C25B11/065

According to International Patent Classification (IPC) or to both national classification and IPC

**B. FIELDS SEARCHED**

Minimum documentation searched (classification system followed by classification symbols)

C25B13/08; C25B1/04; C25B9/00; C25B9/23; C25B9/65; C25B11/052; C25B11/056; C25B11/065; C25B13/04; H01B1/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-017474 A (TOYOTA CENTRAL RES & DEV) 15 February 2021 (2021-02-15) paragraphs [0015]-[0028], [0033]-[0045], [0048]-[0051], [0058]-[0063] | 1-13 |
| Y | WO 2021/079904 A1 (AGC INC.) 29 April 2021 (2021-04-29) paragraphs [0065]-[0072], [0153], [0161]-[0163] | 1-13 |
| Y | US 2020/0048782 A1 (3M INNOVATIVE PROPERTIES COMPANY) 13 February 2020 (2020-02-13) paragraphs [0077], [0083]-[0085] | 6, 7, 11-13 |
| Y | WO 2020/162511 A1 (AGC INC.) 13 August 2020 (2020-08-13) paragraphs [0030]-[0059], [0096]-[0098] | 9, 11-13 |
| A | JP 2009-064777 A (JAPAN GORE TEX INC) 26 March 2009 (2009-03-26) paragraphs [0016], [0031]-[0039] | 1-13 |
| A | JP 2020-023748 A (TORAY INDUSTRIES) 13 February 2020 (2020-02-13) paragraphs [0045]-[0048] | 1-13 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 November 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/033211**

| Patent document cited in search report | Publication date (day/month/year) | Patent family member(s) | Publication date (day/month/year) |
|---|---|---|---|
| JP 2021-017474 A | 15 February 2021 | (Family: none) | |
| WO 2021/079904 A1 | 29 April 2021 | US 2022/0251264 A1<br>paragraphs [0161]-[0174], [0317], [0318], [0333]-[0342]<br>EP 4050041 A1<br>CN 114651352 A | |
| US 2020/0048782 A1 | 13 February 2020 | WO 2018/185616 A1 | |
| WO 2020/162511 A1 | 13 August 2020 | US 2021/0324528 A1<br>paragraphs [0069]-[0108], [0163]-[0166]<br>EP 3922761 A1<br>CN 113396245 A | |
| JP 2009-064777 A | 26 March 2009 | US 2011/0070521 A1<br>paragraphs [0033], [0048]-[0054]<br>WO 2009/022728 A1<br>EP 2190047 A1<br>CA 2695979 A<br>KR 10-2010-0047890 A<br>CN 101809792 A | |
| JP 2020-023748 A | 13 February 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022050363 A
- JP 2022145366 A